# FASCICULE DE BREVET EUROPEEN

(11) **EP 0 955 759 B1**
(45) Date de publication et mention de la délivrance du brevet: **21.08.2002**
(21) Numéro de dépôt: 99401074.2
(22) Date de dépôt: 03.05.1999
(51) Int. Cl.: H04L 29/08

(54) **Procédé et dispositif pour évaluer les consultations de sites web**
Verfahren und Vorrichtung zur Auswertung von Besuchen von Internetseiten
Method and arrangement for evaluating visits to web sites

(30) Priorité: 06.05.1998 FR 9805717
(43) Date de publication de la demande: 10.11.1999
(60) Demande divisionnaire: 00402926.0
(73) Titulaire: FRANCE TELECOM, 75015 Paris (FR)
(72) Inventeur: Bonjour, Dominique, 22300 Lannion (FR); Rabret, Laurent, 22300 Lannion (FR)
(74) Mandataire: Loisel, Bertrand

(56) Documents cités:
- EP-A- 0 478 175
- WO-A-98/10349
- US-A- 5 732 218
- PITKOW J: "In search of reliable usage data on the WWW" COMPUTER NETWORKS AND ISDN SYSTEMS, vol. 29, no. 8-13, septembre 1997 (1997-09), page 1343-1355 XP004095329

## Description

La présente invention concerne le domaine des réseaux informatiques, notamment de l'Internet, basés sur la famille de protocoles IP (voir D. Comer, "Internetworking with TCP/IP", Prentice Hall, 1995). Elle vise à offrir une solution au problème de la mesure fiable et neutre de l'audience des différents services et programmes disponibles sur un tel réseau. En particulier, la caractérisation du flux de requêtes envoyées vers un serveur Web particulier est souhaitable, de même que celle de l'écoute de canaux de distribution (multicast).

L'invention a pour application la mise en place d'une infrastructure de suivi de l'audience des services proposés sur des réseaux tels que l'Internet, permettant des traitements statistiques selon des principes analogues à ceux utilisés aujourd'hui pour la mesure de l'audience des chaînes de télévision. L'existence de mesures d'audience fiables et neutres est un facteur nécessaire pour faire de l'Internet un media grand public, crédible auprès des annonceurs.

Une famille d'outils et de méthodologies disponibles aujourd'hui vise à mesurer l'audience au niveau des serveurs (voir par exemple US-A-5 732 218). Ceci permet d'obtenir un comptage des requêtes de pages Web hébergées par ce serveur. Les suivis d'audience sont actuellement réalisés sur la base de ces indications.

Une amélioration de la méthode précédente, en cours de développement, vise à rendre plus représentatives les mesures fournies en prenant en compte l'action des "caches" (qui masquent certaines requêtes). Cette étude est en cours dans le cadre de l'IETF (voir J. Mogul, P. Leach, "Simple hit metering and usage limiting for HTTP", Draft RFC, Internet Engineering Task Force, 1997 ; ou J. Pitkow, « In search of reliable usage data on the WWW », Computer Network and ISDN systems, Vol. 29, No. 8-13, septembre 1997, pages 1343-1355). Elle consiste pour les "caches" à aller informer les serveurs du nombre de réponses qu'ils ont fournies en leur nom.

Aucune solution connue ne propose de mesurer l'audience des services réseau au niveau des terminaux d'utilisateurs. La mesure d'audience au niveau des serveurs souffre de limitations multiples:
- elle nécessite d'équiper chaque serveur à cet effet, ce qui est difficile à gérer compte tenu de leur prolifération;
- elle n'est pas adaptée à la fourniture de mesures d'audience par un tiers indépendant;
- elle est peu fiable à cause des mécanismes de "cache" et d'agents dits "proxy" (qui envoient des requêtes au nom d'un ensemble de terminaux, souvent pour des raisons de sécurité) ;
- elle n'est pas applicable aux techniques de distribution (multicast).

Les études sur la remontée par les "caches" du nombre de requêtes qu'ils ont interceptées ne s'intéressent qu'à la troisième limitation, et élargissent le problème à un nouvel ensemble d'équipements : à moins de contrôler tous les "caches", on ne peut pas être certain de la véracité de leurs informations, et il est donc difficile de considérer ces chiffres comme fiables.

Dans W098/10349, il est proposé que le site consulté retourne la page Web demandée avec un morceau de programme qui, chez le client, surveille l'affichage à l'écran de la page et commande le renvoi d'informations relatives à cette surveillance. Ce document aborde le problème de la non neutralité du site consulté vis-à-vis de la mesure d'audience. Une solution proposée pour traiter ce problème consiste à crypter les informations de surveillance retournées par le client de façon que seul un tiers indépendant soit capable de les décrypter. Une autre solution consiste en ce que le site consulté réponde à une requête issue d'un client en retransmettant la requête et la page concernée au site indépendant, lequel se charge de retransmettre la page demandée et le morceau de programme approprié vers le site du client. Celui-ci retourne alors les informations de surveillance directement au site indépendant. Les solutions préconisées dans ce document permettent de ne pas équiper les terminaux clients d'un logiciel spécial pour la mesure d'audience. Le but poursuivi est d'essayer que les mesures effectuées soient le plus exhaustives possible. Mais ces solutions impliquent :
- que le contenu des pages résidentes dans le serveur de contenu soit modifié afin d'émettre une requête vers le secteur de collecte en même temps que le contenu intéressant le client (méthode non universelle nécessitant de rééditer l'ensemble des pages sur les serveurs) ;
- que l'information soit acheminée par un serveur indépendant avant d'arriver chez le client, ce qui a nécessairement un impact sur la qualité perçue du service.

L'invention a pour but de permettre une nouvelle approche de la mesure de l'audience sur Internet, basée sur une observation à la source des requêtes produites par les usagers.

L'invention propose ainsi un procédé tel que défini dans la revendication 1.

Un panel de clients, dont les terminaux sont équipés des moyens de mesure, pourra alors fournir en temps réel à une entité indépendante gérant le serveur de collecte le compte exact des sites explorés et des canaux écoutés. Le procédé présente les avantages:
- de permettre d'utiliser les modèles de mesure d'audience (panel choisi sur la base de sa représentativité sociologique) qui ont été développés pour les programmes de télévision. En particulier, il est possible d'associer un profil d'utilisateur à chaque terminal observé, ce qui rend plus pertinentes les données obtenues;
- de ne pas nécessiter d'instrumentation spécifique au niveau de chaque serveur ou canal observé, étant donné qu'on se place à la source des requêtes;
- d'être insensible aux interventions des "caches" puisque les requêtes sont observées dès leur source;
- d'être déployable par un acteur économique indépendant des réseaux et des services empruntés, ce qui est capital vis-à-vis de la neutralité des informations fournies;
- de s'appliquer également aux services Internet utilisant la distribution;
- de pouvoir observer en temps réel les actions (requêtes) des usagers du réseau;
- d'être transparent (c'est-à-dire non contraignant et évolutif) vis-à-vis des applications utilisées pour "naviguer" sur le réseau.

Un mode de réalisation préféré du procédé selon l'invention est énoncé dans la revendication 2.

De cette manière, on est capable non seulement d'évaluer les nombres de consultations des sites, mais encore d'analyser la qualité offerte aux usagers lors de ces consultations (temps de réponse, vitesse, volumes d'information transmis...). Les résultats de ces analyses peuvent être communiqués aux personnes gérant les sites concernés pour leur permettre d'adapter les moyens qu'elles mettent en oeuvre.

Un autre aspect de l'invention se rapporte à un module de détection de messages et de transmission d'informations tel que défini dans la revendication 15. Un troisième aspect de l'invention se rapporte à un programme d'ordinateur selon la revendication 20.

D'autres particularités et avantages de la présente invention apparaîtront dans la description ci-après d'exemples de réalisation non limitatifs, en référence aux dessins annexés, dans lesquels :
- les figures 1 et 2 sont des représentations schématiques de réseaux informatiques ; et
- la figure 3 est un schéma d'un terminal équipé d'un module selon l'invention, illustrant son fonctionnement avec le réseau.

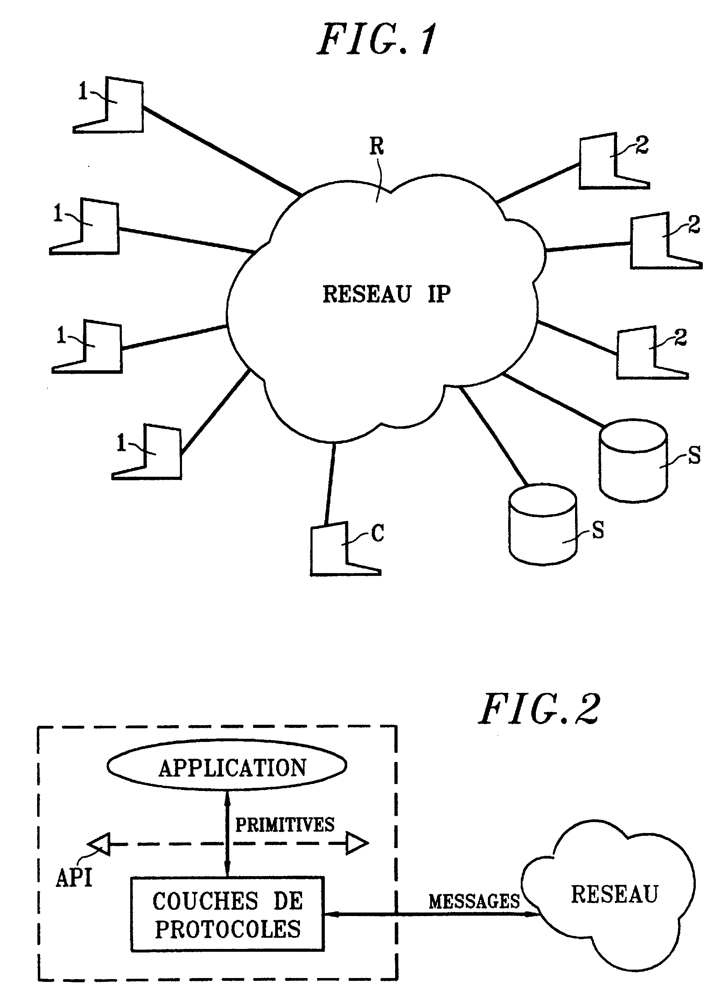

La figure 1 montre schématiquement un réseau R fonctionnant selon un protocole de la famille IP ("Internet Protocol"), auquel sont reliés un certain nombre de terminaux 1 depuis lesquels des requêtes d'accès peuvent être émises sur le réseau R. La référence 2 désigne des serveurs hébergeant des sites (pages Web) qui peuvent être consultés par les terminaux 1 via le réseau.

Un ou plusieurs serveurs de collecte S sont reliés au réseau R afin de recevoir et traiter des données de mesure issues de certains terminaux 1. L'entité gérant un tel serveur de collecte S s'adresse à un panel d'usagers détenteurs de terminaux 1 reliés au réseau R, et leur fournit des moyens de mesure consistant en un module 7 décrit ci-après. Les modules 7 interceptent les messages de requête d'accès émis par des applications exécutées dans les terminaux en question, pour identifier les sites interrogés, déterminer le type de navigateur utilisé et effectuer des mesures dont les résultats sont ensuite fournis au serveur S. Celui-ci peut ensuite effectuer toutes sortes de traitements statistiques pour analyser l'audience des sites 2. Le panel d'usagers est donc déterminé en fonction de critères de représentativité du même genre que ceux utilisés dans le domaine de la mesure d'audience des chaînes de télévision.

Dans le cas où il y a plusieurs serveurs de collecte S, un serveur de configuration C est accessible par le réseau R afin de fournir aux modules 7 les informations de localisation (telles que l'adresse, le numéro de port et le protocole à utiliser) du serveur de collecte S auquel ils doivent s'adresser.

Les applications informatiques conçues pour accéder au réseau utilisent des interfaces logicielles de programmation ("Application Programming Interface", ou API). Ces interfaces de communication en réseau font partie des ressources offertes par le système d'exploitation de chaque terminal. Elles permettent d'accéder aux protocoles de communication implantés en utilisant un ensemble de "primitives", qui appellent des fonctions élémentaires permettant d'ouvrir une connexion vers une adresse distante, d'envoyer et de recevoir des données, de sélectionner un canal de distribution (multicast channel), etc. Ces primitives sont ensuite traduites en messages élémentaires du protocole en question (voir illustration en figure 2). Dans les terminaux, le fonctionnement selon le protocole de communication est assuré par d'autres ressources logicielles du système d'exploitation (gestionnaire de protocole) associées à des cartes de communication appropriées.

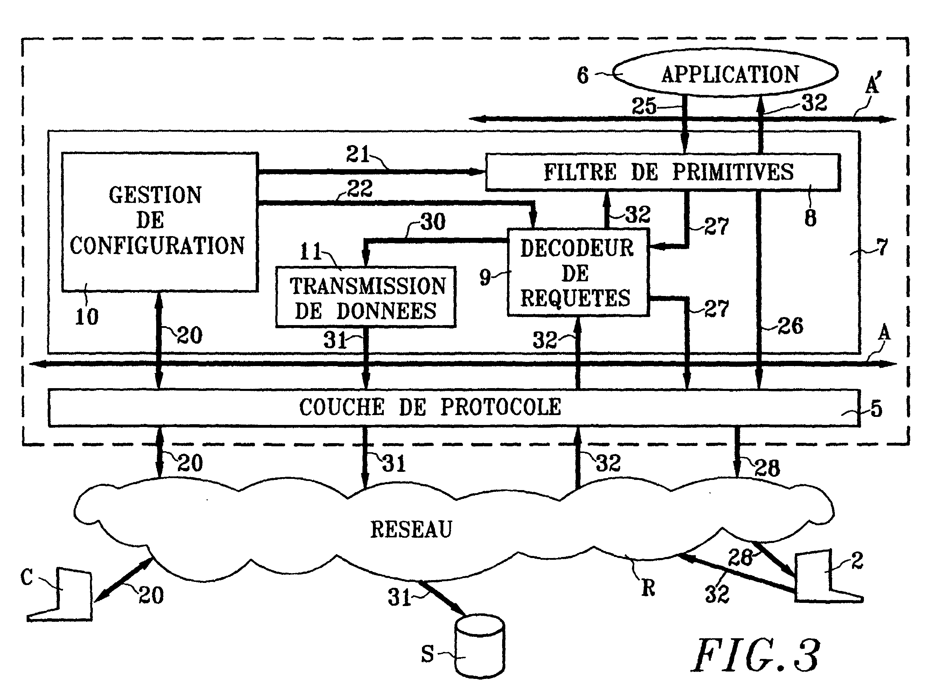

La figure 3 montre un module 7 de détection de messages et de transmission d'informations dont sont équipés les terminaux 1, raccordés au réseau R, des usagers du panel retenu par l'entité gérant un serveur de collecte S.

Sur la figure 3, la référence 5 désigne les éléments de la couche de protocole IP dont est équipé un terminal 1, et la référence A désigne l'API correspondante, prévue dans le terminal 1 pour réaliser l'interface entre le gestionnaire de protocole 5 et les applications 6 exécutées sur le terminal 1 et susceptibles de communiquer via le réseau.

Le module logiciel 7 présente vis-à-vis des applications 6 une interface notée A' qui comprend au minimum l'ensemble obligatoire des fonctions offertes par l'interface A.

Dans le cas courant où le terminal fonctionne avec le système d'exploitation Windows commercialisé par la société Microsoft, l'interface A peut être l'interface Winsock. Dans ce cas, le module logiciel 7, qui présente l'interface A vis-à-vis des applications 6, porte le nom habituel du gestionnaire de protocole standard (Wsock32.dll dans le cas des versions Windows 95 et Windows NT 3.5 ou 4.0). Le module 7 appelle à son tour le gestionnaire de protocole standard 5 qui aura été isolé des applications 6, c'est-à-dire placé dans un répertoire non prioritaire.

Le module 7 comprend un filtre de primitives 8, un décodeur de requêtes 9, un module 10 de gestion de la configuration, et un module 11 de transmission de données.

Le filtre de primitives 8 reçoit les messages conformes à l'interface A. Si le message est issu d'une application 6 et correspond à un flux de données sur lequel l'audience doit être mesurée, il est fourni au décodeur de requêtes 9. Sinon, il est relayé de façon inchangée vers le gestionnaire de protocole 5. Ceci permet d'assurer la transparence du procédé, les messages n'étant pas altérés. La définition et l'identification des flux à observer sont fournis au filtre de primitives 8 par le module de configuration 10.

Le décodeur de requêtes 9 agit sur les flux aiguillés par le filtre de primitives 8. Il analyse le contenu des messages sélectionnés et en déduit des enregistrements élémentaires, ou données de mesure, constitués des informations d'audience (serveur consulté, canal écouté) auxquelles est attachée une étiquette d'horodatage. Les messages analysés sont eux aussi relayés, de façon inchangée, vers le gestionnaire de protocole 5.

Le module de gestion de la configuration 10 permet de programmer le filtre 8 et le décodeur 9 en fonction des informations souhaitées. Ce module 10 dialogue avec le serveur de collecte S et/ou avec le serveur de configuration C via le gestionnaire de protocole 5 et le réseau R, ce qui permet de faire évoluer aisément sa configuration.

Le module de transmission des données 11 dialogue avec le serveur S via le gestionnaire de protocole 5 et le réseau R, en lui renvoyant en temps réel les enregistrements élémentaires produits par le décodeur 9.

Dès que l'application 6 accède pour la première fois au réseau R, le module de gestion de configuration 10 envoie une requête au serveur de configuration C à travers l'interface A, pour initialiser un dialogue représenté par la référence 20 sur la figure 3. Cette requête inclut au minimum l'identification de l'application 6. Le serveur C retourne des informations 21 caractérisant les flux devant faire l'objet d'observations par le module 7 (ces informations 21 sont transmises au filtre de primitives 8) ainsi qu'une description des informations à collecter (ces informations 22 sont transmises au décodeur de requêtes 9). Les paramètres fournis peuvent notamment inclure:
- la description des applications 6 dont les requêtes devront être décodées;
- l'adresse IP et le port TCP (Transmission Control Protocol) du serveur de collecte S auquel les données de mesure devront être transmises;
- l'adresse IP et le port TCP du serveur de configuration C qui servira à la prochaine mise en service du module 7;
- une information permettant de déterminer le décalage entre l'horloge locale (non modifiable) du terminal 1 et l'horloge du serveur S.

A chaque accès au réseau R depuis le terminal 1, l'application 6 fournit au module 7 un message 25 conforme à la spécification de l'interface A. Le filtre de primitives 8 détermine si ce message 25 doit être pris en considération ou non dans le cadre des mesures d'audience. Si le message n'est pas pris en considération, il est simplement transmis au gestionnaire de protocole 5 (référence 26 sur la figure 3) qui va procéder à son acheminement sur le réseau R jusqu'à sa destination 2 (référence 28). Si le message doit être analysé (référence 27), le décodeur de requêtes 9 extrait de son contenu les informations pertinentes, et en déduit des données de mesure qu'il enregistre. Pour assurer la transparence du module 7, ce message 27 est retransmis par le décodeur de requêtes 9 vers le gestionnaire de protocole 5 pour son acheminement inchangé dans le réseau.

Dans le sens de la réception, tous les messages 32 passés au module 7 par le gestionnaire de protocole 5 sont délivrés sans changement à l'application destinataire 6 via le décodeur de requêtes 9 et le filtre de primitives 8. Le décodeur de requêtes 9 se charge d'estimer des éléments de qualité de service de la connexion. Des exemples de paramètres de qualité de service pouvant être mesurés sont:
- l'accessibilité du serveur distant interrogé (succès de la connexion);
- le temps de connexion au serveur;
- la durée nécessaire pour charger le document demandé (fonction du débit utile moyen de la connexion);
- l'éventuel arrêt du transfert en cours, soit du côté du terminal soit du côté du réseau ...

Les données de mesure 30 obtenues par le décodeur de requêtes 9 sont fournies au module de transmission de données 11. Ce module 11 se connecte au serveur de collecte S à travers l'interface A et le gestionnaire de protocole 5, et lui transmet en temps réel les données de mesure produites par le décodeur 9 (message 31).

Dans le cas du service Web porté par la pile de protocoles TCP/HTTP (voir D. Comer, Internetworking with TCP/IP", Prentice Hall, 1995), le décodeur de requêtes 9 extrait des messages HTTP (Hypertext Transfer Protocol, voir HTTP/1.0, RFC 1945, Internet Engineering Task Force, 1996) les informations d'identification du serveur S, le type de transaction effectué et la nature des documents demandés.

Par exemple, avec la version 1.0 de HTTP, trois transactions élémentaires sont prévues, à savoir GET (pour demander un document), HEAD (pour demander uniquement l'en-tête d'un document) et POST (pour transmettre des informations au serveur). Pour chacune de ces commandes, le message est analysé par le décodeur de requêtes 9 afin d'en extraire l'URL (Uniform Ressource Locator) qui identifie à la fois un document et une machine serveur.

Un traitement spécifique est effectué dans le cas du protocole IGMP (Internet Group Membership Protocol) qui permet aux terminaux de s'inscrire comme membres d'un groupe de distribution particulier (commandé par des options particulières de l'interface A).

Les données de mesure 30 fournies par le décodeur de requêtes 9 au module de transmission de données 11 peuvent comprendre, sous la forme d'une chaîne de caractères à un format déterminé, les quatre informations suivantes:
- identification du terminal 1, créée lors de l'installation du module 7 dans le terminal 1. Cette identification, en principe invariable, est par exemple codée sur 32 bits. Elle permettra au serveur S d'établir des statistiques en fonction du type d'usagers;
- nom de l'application 6 d'où provient la requête, cette information permettant notamment de connaître le logiciel de recherche employé;
- l'instant d'émission et de conclusion de la requête, permettant d'analyser la distribution temporelle du trafic ainsi que les éléments de qualité de service;
- l'URL ou l'adresse de groupe permettant d'identifier les données demandées.

Lorsqu'il est établi que l'application active 6 a pour objet la recherche d'informations via le réseau R (navigation Web), le module il initialise une communication vers le serveur de collecte S à l'aide de la primitive "connect" si cette communication n'est pas déjà établie. Les données de mesure 30 fournies par le décodeur de requêtes 9 sont ensuite envoyées au serveur S au vol. La connexion entre le module 11 et le serveur S est rompue lorsque toutes les "sockets" ouvertes par l'application 6 auront été fermées.

On a vu que la même entité peut gérer plusieurs serveurs de collecte S reliés au réseau R, différenciés par leur adresse IP et/ou leur port TCP. L'adresse IP et le port TCP du serveur S auquel doit se connecter le module 7 équipant un terminal particulier sont alors spécifiés de façon dynamique par le module 10 de gestion de la configuration. Ceci permet d'assurer un partage de charge entre les différents serveurs de collecte.

## Revendications

1. Procédé pour évaluer les consultations de sites (2) ou de canaux de diffusion accessibles par un réseau de télécommunications (R), **caractérisé en ce que** l'on relie au réseau au moins un serveur de collecte (S) indépendant desdits sites au canaux de diffusion, et on équipe de moyens de mesure un ensemble de terminaux informatiques reliés au réseau, les moyens de mesure (7) dont sont équipés un terminal dudit ensemble étant agencés pour recevoir des messages d'accès émis par le terminal vers le réseau, pour retransmettre ces messages sur le réseau, et pour adresser des données de mesure au serveur de collecte par l'intermédiaire du réseau en réponse à la détection d'au moins un message d'accès concernant l'un des sites dont les consultations sont à évaluer, le serveur de collecte assurant un traitement des données de mesure reçues pour estimer les nombres de consultations des sites.

2. Procédé selon la revendication 1, dans lequel les moyens de mesure (7) dont sont équipés un terminal (1) évaluent la qualité de communication lors d'un échange de messages entre le terminal et l'un desdits sites par l'intermédiaire du réseau, et incluent dans les données de mesure adressées au serveur de collecte (S) des informations sur la qualité évaluée.

3. Procédé selon la revendication 2, dans lequel les moyens de mesure (7) dont sont équipés un terminal dudit ensemble sont agencés pour pour retransmettre les messages d'accès sur le réseau par l'intermédiaire d'un gestionnaire de protocole (5), pour détecter certains au moins de ces messages d'accès concernant l'un des sites dont les consultations sont à évaluer, pour recevoir des messages en retour provenant dudit site par l'intermédiaire du gestionnaire de protocole, pour retransmettre ces messages en retour vers une application (6) exécutée dans le terminal et pour analyser lesdits messages d'accès et messages en retour afin d'estimer des éléments de qualité de communication.

4. Procédé selon la revendication 3, dans lequel lesdits éléments de qualité de communication comprennent des éléments relatifs à l'accessibilité d'un site interrogé dans un message d'accès.

5. Procédé selon la revendication 3 ou 4, dans lequel lesdits éléments de qualité de communication comprennent des éléments relatifs au temps de connexion à un site interrogé dans un message d'accès.

6. Procédé selon l'une quelconque des revendications 3 à 5, dans lequel lesdits éléments de qualité de communication comprennent des éléments relatifs à la durée nécessaire pour charger un document demandé.

7. Procédé selon l'une quelconque des revendications 3 à 6 dans lequel lesdits éléments de qualité de communication comprennent des éléments relatifs à un éventuel arrêt d'un transfert en cours.

8. Procédé selon l'une quelconque des revendications 1 à 7, dans lequel les moyens de mesure (7) communiquent avec le réseau (R) par l'intermédiaire d'un gestionnaire de protocole (5) fonctionnant selon le protocole IP.

9. Procédé selon la revendication 8, dans lequel les moyens de mesure (7) coopèrent avec le gestionnaire de protocole (5) à travers une première interface (A) et avec au moins une application (6) exécutée dans le terminal (1) à travers une seconde interface (A') comprenant au moins un ensemble obligatoire des fonctions offertes par ladite première interface.

10. Procédé selon l'une quelconque des revendications 1 à 9, dans lequel les moyens de mesure (7) dont sont équipés un terminal dudit ensemble sont agencés pour détecter si chacun desdits messages d'accès concerne l'un des sites dont les consultations sont à évaluer.

11. Procédé selon l'une quelconque des revendications 1 à 10, dans lequel des informations (21) caractérisant des flux devant faire l'objet d'observations par les moyens de mesure (7) sont obtenues en interrogeant un serveur de configuration (C) par l'intermédiaire du réseau (R).

12. Procédé selon l'une quelconque des revendications 1 à 11, dans lequel une description d'informations à collecter par les moyens de mesure (7) est obtenue en interrogeant un serveur de configuration (C) par l'intermédiaire du réseau (R).

13. Procédé selon l'une quelconque des revendications 1 à 12, dans lequel le réseau (R) fonctionne selon le protocole IP, et dans lequel une adresse IP et un port TCP du serveur de collecte (S) auquel les données de mesure sont à transmettre sont obtenus par les moyens de mesure (7) en interrogeant un serveur de configuration (C) par l'intermédiaire du réseau (R).

14. Procédé selon l'une quelconque des revendications 1 à 13, dans lequel une information permettant de déterminer un décalage entre une horloge locale du terminal (1) et une horloge du serveur de collecte (S) est obtenue par les moyens de mesure (7) en interrogeant un serveur de configuration (C) par l'intermédiaire du réseau (R).

15. Module de détection de messages et de transmission d'informations, à installer dans un terminal informatique (1) raccordé à un réseau de télécommunications (R), **caractérisé en ce qu'**il comprend:
- un filtre de primitives (8) recevant des messages émis vers le réseau par des applications (6) exécutées dans le terminal, pour identifier ceux de ces messages qui se rapportent à des requêtes d'accès à certains sites (2) accessibles par le réseau, et pour transmettre les autres messages vers le réseau;
- un décodeur de requêtes (9) recevant les messages de requête d'accès identifiés par le filtre de primitives (8), pour analyser ces messages et obtenir ainsi des données de mesure, et pour transmettre ces messages vers le réseau; et
- des moyens de transmission de données (11) pour transmettre les données de mesure obtenues par le décodeur de requêtes à un serveur de collecte (S) accessible par le réseau et indépendant desdits sites au canaux de diffusion.

16. Module selon la revendication 15, comprenant en outre des moyens de gestion de configuration (10) pour obtenir d'un serveur de configuration (C) et/ou du serveur de collecte (S), via le réseau (R), des paramètres de configuration du filtre de primitives (8) et du décodeur de requêtes (9).

17. Module selon la revendication 15 ou 16, dans lequel les données de mesure incluent des informations sur une qualité de communication évaluée.

18. Module selon l'une quelconque des revendications 15 à 17, présentant une interface (A) avec un gestionnaire de protocole (5) fonctionnant selon le protocole IP pour communiquer par l'intermédiaire du réseau (R).

19. Module selon la revendication 18, présentant une seconde interface (A') pour communiquer avec lesdites applications (6) exécutées dans le terminal, cette seconde interface comprenant au moins un ensemble obligatoire des fonctions offertes par l'interface (A) avec le gestionnaire de protocole (5).

20. Programme d'ordinateur **caractérisé en ce qu'**il comprend des portions de code pour exécuter les étapes suivantes lors d'une exécution du programme dans un terminal informatique (1) raccordé à un réseau de communication (R) :
- recevoir des messages émis vers le réseau par des applications (6) exécutées dans le terminal,
- identifier ceux de ces messages qui se rapportent à des requêtes d'accès à certains sites (2) accessibles par le réseau,
- transmettre les autres messages vers le réseau,
- analyser les messages identifiés comme se rapportant à des requêtes d'accès, pour obtenir des données de mesure,
- transmettre vers le réseau lesdits messages identifiés comme se rapportant à des requêtes d'accès,
- transmettre les données de mesure à un serveur de collecte (S) par l'intermédiaire du réseau.

21. Programme d'ordinateur selon la revendication 20 enregistré sur un support lisible par ordinateur.

## Patentansprüche

1. Verfahren zum Auswerten der Besuche von über ein Telekommunikationsnetz (R) zugänglichen Websites (2) oder Aussendungskanälen, **dadurch gekennzeichnet, dass** mit dem Netz wenigstens ein von den Websites oder Ausssendungskanälen unabhängiger Sammelserver (S) verbunden wird und eine Anordnung von mit dem Netz verbundenen Informationsterminals mit Meßmitteln ausgerüstet wird, wobei die Meßmittel (7), mit denen ein Terminal der Anordnung ausgerüstet ist, so ausgebildet sind, dass vom Terminal zum Netz hin ausgesandte Zugriffsnachrichten empfangen werden, um diese Nachrichten auf das Netz zu übermitteln und um an den Sammelserver über das Netz Meßdaten in Reaktion auf die Detektion wenigstens einer Zugriffsnachricht zu adressieren, die eine der Websites betrifft, deren Besuche auszuwerten sind, wobei der Sammelserver eine Verarbeitung der empfangenen Meßdaten sicherstellt, um die Besuchsanzahlen der Websites zu schätzen.

2. Verfahren nach Anspruch 1, bei dem die Meßmittel (7), mit denen ein Terminal (1) ausgerüstet ist, die Kommunikationsqualität bei einem Nachrichtenaustausch zwischen dem Terminal und einer der Websites über das Netz auswerten und in den an den Sammelserver (S) adressierten Meßdaten Informationen über die ausgewertete Qualität einschließen.

3. Verfahren nach Anspruch 2, bei dem die Meßmittel (7), mit denen ein Terminal der Anordnung ausgerüstet ist, eingerichtet sind, um die Zugriffsnachrichten über das Netz im Wege über eine Protokoll-Verwaltung (5) zu übermitteln, um wenigstens manche dieser Zugriffsnachrichten zu detektieren, die eine der Websites betreffen, deren Besuche auszuwerten sind, um Rücknachrichten, die von der genannten Website stammen, über die Protokoll-Verwaltung zu empfangen, um diese Rücknachrichten zu einer im Terminal ausgeführten Anwendung (6) hin zu übermitteln und um die genannten Zugriffsnachrichten und Rücknachrichten zu analysieren, um die Kommunikationsqualitätselemente zu schätzen.

4. Verfahren nach Anspruch 3, bei dem die Kommunikationsqualitätselemente Elemente umfassen, die sich auf die Zugänglichkeit einer abgefragten Website bei einer Zugriffsnachricht beziehen.

5. Verfahren nach Anspruch 3 oder 4, bei dem die Kommunikationsqualitätselemente Elemente umfassen, die sich auf die Verbindungszeit mit einer abgefragten Website bei einer Zugriffsnachricht beziehen.

6. Verfahren nach einem der Ansprüche 3 bis 5, bei dem die Kommunikationsqualitätselemente Elemente umfassen, die sich auf die zum Laden eines angeforderten Dokuments notwendige Dauer beziehen.

7. Verfahren nach einem der Ansprüche 3 bis 6, bei dem die Kommunikationsqualitätselemente Elemente umfassen, die sich auf ein eventuelles Anhalten einer ablaufenden Übertragung beziehen.

8. Verfahren nach einem der Ansprüche 1 bis 7, bei dem die Meßmittel (7) mit dem Netz (R) im Wege über eine Protokoll-Verwaltung (5) kommunizieren, die entsprechend dem IP-Protokoll arbeitet.

9. Verfahren nach Anspruch 8, bei dem die Meßmittel (7) mit der Protokoll-Verwaltung (5) durch eine erste Schnittstelle (A) hindurch und mit wenigstens einer im Terminal (1) ausgeführten Anwendung (6) durch eine zweite Schnittstelle (A') hindurch zusammenarbeiten, die wenigstens eine obligatorische Anordnung der durch die erste Schnittstelle angebotenen Funktionen umfaßt.

10. Verfahren nach einem der Ansprüche 1 bis 10, bei dem die Meßmittel (7), mit denen ein Terminal der genannten Anordnung ausgerüstet ist, zum Detektieren eingerichtet sind, wenn jede der Zugriffsnachrichten eine der Websites betrifft, deren Besuche auszuwerten sind.

11. Verfahren nach einem der Ansprüche 1 bis 10, bei dem Informationen (21), die Ströme vor dem Erstellen des Beobachtungsobjekts durch die Meßmittel (7) charakterisieren, erhalten werden, indem ein Konfigurationsserver (C) über das Netz (R) abgefragt wird.

12. Verfahren nach einem der Ansprüche 1 bis 11, bei dem eine Beschreibung von durch die Meßmittel (7) zu sammelnden Informationen erhalten wird, indem ein Konfigurationsserver (C) über das Netz (R) abgefragt wird.

13. Verfahren nach einem der Ansprüche 1 bis 12, bei dem das Netz (R) entsprechend dem IP-Protokoll arbeitet und bei dem eine IP-Adresse und ein TCP-Port des Sammelservers (S), an den die Meßdaten zu übertragen sind, durch die Meßmittel (7) erhalten werden, indem ein Konfigurationsserver (C) über das Netz (R) abgefragt wird.

14. Verfahren nach einem der Ansprüche 1 bis 13, bei dem eine Information, die das Ermitteln eines Versatzes zwischen einem lokalen Takt des Terminals (1) und einem Takt des Sammelservers (S) ermöglicht, durch die Meßmittel (7) erhalten wird, indem ein Konfigurationsserver (C) über das Netz (R) abgefragt wird.

15. Modul zur Detektion von Nachrichten und zur Übertragung von Informationen, das in einem Informationsterminal (1) anzubringen ist, das an ein Telekommunikationsnetz (R) angeschlossen ist, **dadurch gekennzeichnet, dass** es umfaßt:
- ein Grundelementefilter (8), das Nachrichten empfängt, die durch im Terminal ausgeführte Anwendungen (6) zum Netz hin ausgesendet werden, zum Identifizieren derjenigen dieser Nachrichten, die sich auf Zugriffsanfragen an bestimmte, durch das Netz zugängliche Websites (2) beziehen, und zum Übertragen der anderen Nachrichten zum Netz hin;
- einen Anfragendecodierer (9), der die durch das Grundelementefilter (8) identifizierten Zugriffsanfragenachrichten empfängt, zum Analysieren dieser Nachrichten und somit zum Erhalten von Meßdaten und zum Übertragen dieser Nachrichten zum Netz hin; und
- Datenübertragungsmittel (11) zum Übertragen der Meßdaten, die durch den Anfragendecodierer erhalten wurden, an einen Sammelserver (S), der durch das Netz zugänglich und von den Websites oder Aussendungskanälen unabhängig ist.

16. Modul nach Anspruch 15, das außerdem Konfigurationsausführungsmittel (10) umfaßt, um von einem Konfigurationsserver (C) und/oder dem Sammelserver (S) über das Netz (R) Konfigurationsparameter des Grundelementefilters (8) und des Anfragendecodierers (9) zu erhalten.

17. Modul nach Anspruch 15 oder 16, bei dem die Meßdaten Informationen über eine ausgewertete Kommunikationsqualität einschließen.

18. Modul nach Anspruch 15 bis 17, das eine Schnittstelle (A) mit einer Protokoll-Verwaltung (5) aufweist, die entsprechend dem IP-Protokoll arbeitet, um über das Netz (R) zu kommunizieren.

19. Modul nach Anspruch 18, der eine zweite Schnittstelle (A') zum Kommunizieren mit den im Terminal ausgeführten Anwendungen (6) aufweist, wobei diese zweite Schnittstelle wenigstens eine obligatorische Anordnung der durch die Schnittstelle (A) mit der Protokoll-Verwaltung (5) angebotenen Funktionen umfaßt.

20. Rechnerprogramm, **dadurch gekennzeichnet, dass** es Codeteile zum Ausführen der folgenden Schritte bei einer Ausführung des Programms in einem an ein Kommunikationsnetz (R) angeschlossenen Informationsterminal (1) umfaßt:
- Empfangen der Nachrichten, die zum Netz hin durch die im Terminal ausgeführten Anwendungen (6) ausgesendet werden,
- Identifizieren derjenigen dieser Nachrichten, die sich auf Zugriffsanfragen an bestimmte, durch das Netz zugängliche Websites (2) beziehen,
- Übertragen der anderen Nachrichten zum Netz hin,
- Analysieren der identifizierten Nachrichten, sofern sie sich auf Zugriffsanfragen beziehen, um Meßdaten zu erhalten,
- Übertragen der identifizierten Nachrichten, sofern sie sich auf Zugriffsanfragen beziehen, zum Netz hin,
- Übertragen der Meßdaten an einen Sammelserver (S) über das Netz.

21. Rechnerprogramm nach Anspruch 20, das auf einem rechnerlesbaren Träger gespeichert ist.

## Claims

1. Method for evaluating visits to sites (2) or multicast channels accessible by a telecommunications network (R), **characterized in that** at least one collection server (S) independent of said sites or multicast channels is linked to the network, and that a set of computer terminals linked to the network is equipped with means of measurement, the means of measurement (7) with which a terminal of said set is equipped being arranged to receive access messages sent by the terminal toward the network, in order to relay these messages on the network, and to address measurement data to the collection server via the network in response to the detection of at least one access message concerning one of the sites for which visits are to be evaluated, the collection server providing processing of the measurement data received in order to estimate the number of visits to the sites.

2. Method according to claim 1, wherein the means of measurement (7) with which a terminal (1) is equipped evaluate the communication quality when there is an exchange of messages between the terminal and one of said sites via the network, and include in the measurement data sent to the collection server (S) information about the evaluated quality.

3. Method according to claim 2 wherein the means of measurement (7) with which a terminal of said set is equipped are arranged to relay the access messages on the network through a protocol manager (5), in order to detect at least some of these access messages concerning one of the sites for which the visits are to be evaluated, to receive acknowledgement messages originating from this site through the protocol manager, to relay these acknowledgement messages to an application (6) run on the terminal and to analyse said access messages and acknowledgement messages in order to assess elements of communication quality.

4. Method according to claim 3, wherein said elements of communication quality include elements relating to the accessibility of a site interrogated in an access message.

5. Method according to claim 3 or 4, wherein said elements of communication quality include elements relating to connection time to a site interrogated in an access message.

6. Method according to anyone of claims 3 to 5, wherein said elements of communication quality include elements relating to the time required to load the requested document.

7. Method according to anyone of claims 3 to 6, wherein said elements of communication quality include elements relating to a possible interruption to a transfer in progress.

8. Method according to anyone of claims 1 to 7, wherein the means of measurement (7) communicate with the network (R) by means of a protocol manager (5) operating in accordance with the IP protocol.

9. Method according to claim 8, wherein the means of measurement (7) cooperate with the protocol manager (5) via a first interface (A) and with at least one application (6) run on the terminal (1) via a second interface (A') including at least one mandatory set of functions offered by said first interface.

10. Method according to anyone of claims 1 to 9, wherein the means of measurement (7) with which a terminal of said set is equipped are arranged to detect whether each of said access messages concerns one of the sites for which the visits are to be evaluated.

11. Method according to anyone of claims 1 to 10, wherein information (21) **characterizing** flows which must be observed by the means of measurement (7) is obtained by interrogating a configuration server (C) through the network (R).

12. Method according to anyone of claims 1 to 11, wherein a description of information to be collected by the means of measurement (7) is obtained by interrogating a configuration server (C) through the network (R).

13. Method according to anyone of claims 1 to 12, wherein the network (R) operates in accordance with the IP protocol, and wherein an IP address and a TCP port of the collection server (S) to which the measurement data are to be sent are obtained by the means of measurement (7) by interrogating a configuration server (C) through the network (R).

14. Method according to anyone of claims 1 to 13, wherein an information item enabling identification of a difference between a local clock in the terminal (1) and a clock in the collection server (S) is obtained by the means of measurement (7) by interrogating a configuration server (C) through the network (R).

15. Module for detection of messages and transmission of information, to be installed in a computer terminal (1) connected to a telecommunications network (R), **characterized in that** it includes:
- a primitive filter (8) receiving messages sent toward the network by applications (6) run on the terminal, to identify from these messages those which relate to requests for access to certain sites (2) accessible by the network, and to relay the other messages toward the network;
- a requests decoder (9) receiving the messages requesting access identified by the primitive filter (8), to analyse these messages and thus obtain measurement data, and to relay these messages toward the network; and
- means of data transmission (11) to transmit the measurement data obtained by the requests decoder to a collection server (S) accessible by the network and independent of these sites or multicast channels.

16. Module according to claim 15, further including means of configuration management (10) in order to obtain from a configuration server (C) and/or from the collection server (S), via the network (R), configuration parameters of the primitive filter (8) and of the requests decoder (9).

17. Module according to claim 15 or 16, wherein the measurement data include information about an evaluated communication quality.

18. Module according to anyone of claims 15 to 17, including an interface (A) with a protocol manager (5) operating in accordance with the IP protocol to communicate by means of the network (R).

19. Module according to claim 18, including a second interface (A') to communicate with said applications (6) run on the terminal, this second interface including at least a mandatory set of functions offered by the interface (A) with the protocol manager (5).

20. Computer program **characterized in that** it includes code portions for executing the following steps during an execution of the program on a computer terminal (1) connected to a communication network (R):
- receiving messages sent toward the network by applications (6) run on the terminal,
- identifying from these messages those which relate to requests for access to certain sites (2) accessible by the network,
- relaying the other messages toward the network,
- analysing the messages identified as relating to requests for access, to obtain measurement data,
- relaying toward the network said messages identified as relating to requests for access,
- relaying the measurement data to a collection server (S) through the network.

21. Computer program according to claim 20 stored on a machine-readable medium.
